# EUROPEAN PATENT SPECIFICATION

(11) **EP 3 631 731 B1**
(45) Date of publication and mention of the grant of the patent: **22.10.2025**
(21) Application number: 18809044.3
(22) Date of filing: 30.04.2018
(51) Int. Cl.: G06Q 40/04

(54) **SYSTEM FOR PUSHING TRANSACTIONAL DATA**
SYSTEM ZUR AUSGABE VON TRANSAKTIONSDATEN
SYSTÈME DE POUSSÉE DE DONNÉES TRANSACTIONNELLES

(30) Priority: 31.05.2017 US 201715610510
(43) Date of publication of application: 08.04.2020
(73) Proprietor: Intuit Inc., Mountain View, CA 94043 (US)
(72) Inventor: KUNJACHAN, George, Chiramattel, San Jose, CA 95124 (US); ARYA, Amit, Mountain View, CA 94043 (US); VOGEL, Peter, Allen, Santa Clare, CA 95054 (US)
(74) Representative: D Young & Co LLP
(86) International application number: PCT/US2018/030149
(87) International publication number: WO 2018/222318

(56) References cited:
- CN-A- 105 488 223
- US-A1- 2003 046 083
- US-A1- 2008 052 091
- US-A1- 2009 083 159
- US-A1- 2010 312 657
- US-A1- 2011 161 233

## Description

### BACKGROUND

Current standards for exchanging transactional information (e.g., the Open Financial Exchange (OFX), a framework for exchanging financial transactional data and instructions between customers and their financial institutions) do not support the capability to obtain detailed transactional information associated with users. That is, while aggregate-level transactional information may be accessible (e.g., a payment amount of a transaction), transaction details (e.g., line items purchased) are typically unavailable.

In addition, current standards for exchanging financial transactional data typically require point-to-point connections, which grow proportionally with the number of participating organizations, thereby creating bottlenecks. For example, while a point-to-point architecture may be sufficient to support a user's interactions with a few financial institutions, when the architecture is opened to an arbitrary number of service providers, a point-to-point architecture may become unwieldy. Furthermore, substantial overhead may be required to authenticate numerous participants and maintain participant accounts.

Accessing detailed transactional information associated with users is typically based on a "pull" model driven by explicit requests (e.g., to financial institutions). The detailed transactions may be dispersed across multiple service providers, and it may be difficult or impossible to collect such detailed transactions in a timely manner. This difficulty hinders access to detailed transaction information, which could be used to support analytics and insights.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In general, in one aspect, one or more embodiments relate to a system including transaction storage devices. Each transaction storage device includes a data store configured to receive a request, from a service provider, to push a detailed transaction corresponding to a secure identifier. The secure identifier is generated, using an encoding function, from a user identifier of a user. The data store is further configured to store the detailed transaction based on a determination that the detailed transaction is valid. The system further includes a validator configured to obtain, from a registry, a validation rule corresponding to the secure identifier, and perform the determination. The determination includes applying the validation rule to the request. The system further includes the registry. The registry is configured to store at least the validation rule.

In general, in one aspect, one or more embodiments relate to a method including receiving a request to push a detailed transaction corresponding to a secure identifier. The secure identifier is generated, using an encoding function, from a user identifier of a user. The method further includes obtaining a validation rule corresponding to the secure identifier, determining, based on applying the validation rule to the request, whether the detailed transaction is valid, and storing the detailed transaction based on determining that the detailed transaction is valid.

In general, in one aspect, one or more embodiments of the invention relate to a non-transitory computer readable medium including instructions that, when executed by a computer processor, perform a method including receiving a request to push a detailed transaction corresponding to a first secure identifier. The secure identifier is generated, using an encoding function, from a user identifier of a user. The method further includes obtaining a validation rule corresponding to the secure identifier, determining, based on applying the validation rule to the request, whether the detailed transaction is valid, and storing the detailed transaction based on determining that the detailed transaction is valid.

Other aspects of the invention will be apparent from the following description and the appended claims.

### BRIEF DESCRIPTION OF DRAWINGS

FIG. 1 shows a system in accordance with one or more embodiments of the invention.
FIG. 2A, FIG. 2B, and FIG. 2C show systems in accordance with one or more embodiments of the invention.
FIG. 3, FIG. 4A, and FIG. 4B show flowcharts of a process in accordance with one or more embodiments of the invention.
FIG. 5A, FIG. 5B, FIG. 5C, and FIG. 5D show examples in accordance with one or more embodiments of the invention.
FIG. 6A and FIG. 6B show a computing system in accordance with one or more embodiments of the invention.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, embodiments of the invention are directed to a system, method, and non-transitory computer readable medium for pushing detailed transaction information generated by transaction sources. In one or more embodiments, the system architecture is based on a registry that maps a secure identifier (*e.g.,* a hash of a user identifier that has been converted to a standardized format) to a link (e.g*.,* a URI) to a data store. Using secure identifiers may protect the privacy of users, so that potentially sensitive user identifiers are not exposed in the registry. The data store includes detailed transactions associated with secure identifiers. Once a user has registered a secure identifier with a data store, various entities may access the registry to lookup a link to the data store corresponding to the secure identifier, and then use that link to push detailed transactions relative to the data store for later access by a financial (*e.g.,* accounting) application selected by a user. The data store may be viewed as similar to an email inbox: anyone may push a transaction to the data store if they know the address of the data store (*e.g.,* just as anyone can send an email message to a recipient if they know the recipient's email address).

Examples of user identifiers may include financial instruments (*e.g.,* credit card numbers), email addresses, usernames, customer loyalty numbers, telephone numbers, etc. A user may own several user identifiers. Examples of transaction sources may include financial institutions (*e.g.,* credit card issuers), retail establishments (e.g., brick and mortar or e-commerce stores), etc. The detailed transaction information may include comprehensive information about line items of the transaction.

Embodiments of the invention relate to creating a standard for facilitating, via a registry, the discovery of where to send detailed transaction information. It may be desirable to employ an open architecture where no single entity owns the registry, in order to encourage various entities to participate on an equal footing. The registry may be collectively operated by members of a consortium (e.g., a consortium analogous to the OFX consortium but whose focus is on mapping secure identifiers to links to data stores). An example of a data store is an accounting system (e.g., QuickBooks Online^{®} or Mint^{®}). Anyone (*e.g.,* a service provider) may access the registry to obtain the location of a data store link (*e.g*., universal resource identifier, or URI) given a secure identifier. The detailed transaction information may include transactions generated by any service provider (*e.g.*, a brick-and-mortar and/or e-commerce stores). Pre-existing point-to-point connections are not required to access the registry.

Any entity *(e.g.,* a service provider) may transmit new detailed transactions by accessing the registry and finding a link to the data store corresponding to a specific secure identifier. For example, when a user transacts business with a service provider, the service provider may push the corresponding detailed transactions to the user's data store. The service provider may lookup a link to the appropriate data store by presenting, to the registry, a secure identifier generated from a user identifier obtained by the service provider during the transaction (e.g., credit-card number, loyalty number, email address, etc.). For example, when a user transacts business using a user identifier, the corresponding detailed transactions may be pushed to the appropriate data store and stored with the secure identifier corresponding to that user identifier. Therefore transactions corresponding to a secure identifier, although generated from a variety of sources (e.g., service providers) flow to, and may be aggregated at a single data store.

The data store may typically be the user's accounting system. Although the user may not allow general access to read the data in the data store, the user may permit transaction sources (e.g., service providers) to push data to the data store. For example, allowing transaction sources to push data to the data store may assist the user by eliminating the need for the user to perform data entry regarding important transactions.

In one or more embodiments, contextual and user-configurable validation rules determine which validation procedures are followed for detailed transactions corresponding to a specific secure identifier. For example, a validation procedure may specify that explicit approvals from a third party *(e.g.,* a financial institution identified in the detailed transaction) be required to validate detailed transactions corresponding to one secure identifier, while automated validation (e.g., based on comparisons with transaction summaries and/or other metadata) may be sufficient to validate other detailed transactions corresponding to another secure identifier. Similarly, alerting rules may be used to determine when a user is to be alerted regarding the arrival of new detailed transactions.

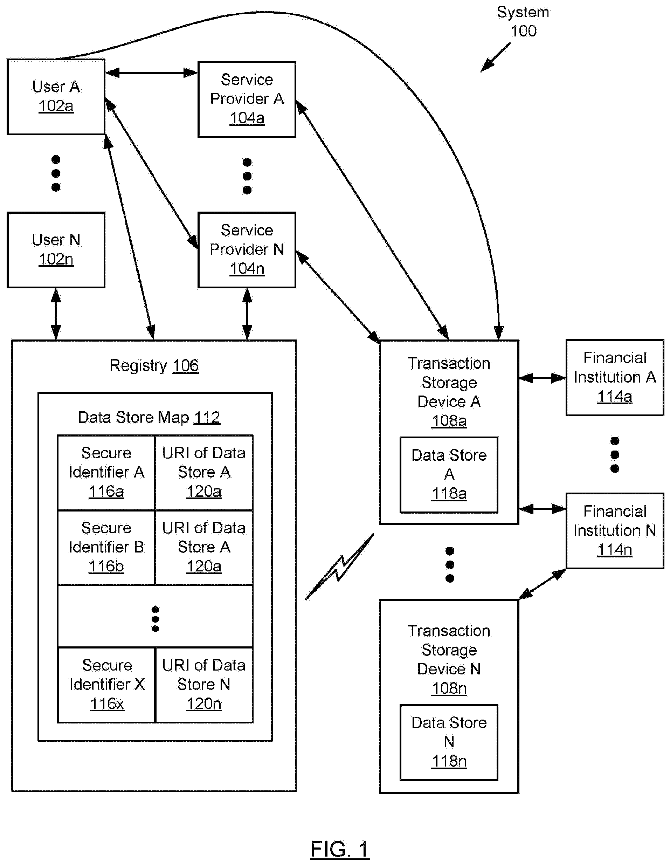

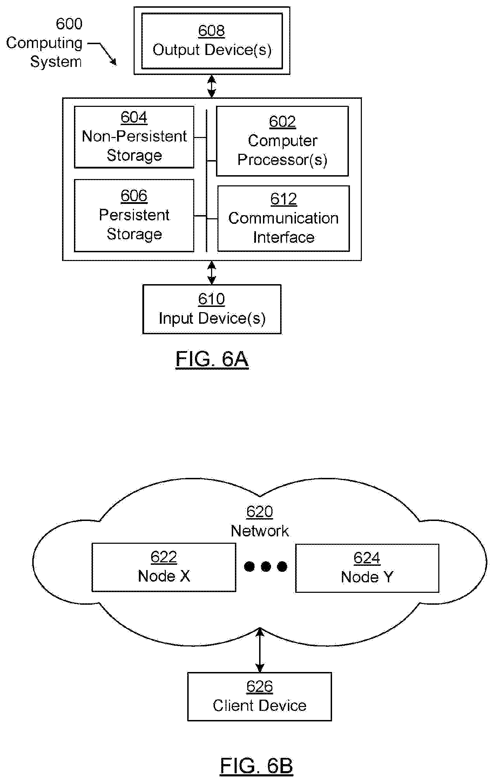

FIG. 1 shows a system (100) in accordance with one or more embodiments of the invention. As shown in FIG. 1, the system (100) includes users (102a-102n), service providers (104a-104n), a registry (106), transaction storage devices (108a-108n), and financial institutions (114a-114n). In one or more embodiments of the invention, the users (102a-102n), service providers (104a-104n), registry (106), and transaction storage devices (108a-108n) may communicate via a computer network (not shown) (e.g., the network (620) described with respect to FIG. 6B).

In one or more embodiments, a user (102a-102n) may be an individual, business, or other entity that receives products and/or services from a service provider (104a-104n). In one or more embodiments, a service provider (104a-104n) is a merchant from which a user (102a-102n) receives products and/or services and for which the user (102a-102n) provides remuneration. In one or more embodiments, a service provider (104a-104n) includes functionality to generate a detailed transaction corresponding to the products and/or services provided to the user (102a-102n). In one or more embodiments, a financial institution (114a-114n) is an organization (e.g., a bank or credit union) that offers credit, loans and/or other financial services to users (102a-102n). One example of a financial institution (114a-114n) is a payment card issuer that offers credit cards and/or debit cards to users (102a-102n).

In one or more embodiments, a transaction includes a group of operations that are either performed completely or not at all *(e.g.,* in order to maintain a consistent state). That is, the transaction may succeed or fail as a unit. For example, a transaction may consist of debit operation that subtracts a value from one account and a credit operation that adds the value to a second account, where either both operations are performed or neither operation is performed. That is, if the transaction is interrupted after performing either the debit or credit operation, then the transaction is undone (*i.e.,* rolled back). In one or more embodiments, a transaction is generated by a service provider (104a-104n). For example, the service provider (104a-104n) may need to record and monitor which line items are involved in the transaction, in order to track the inventory levels corresponding to those line items.

In one or more embodiments of the invention, a transaction storage device (108a-108n) includes any type of storage unit and/or device *(e.g.,* a file system, database, collection of tables, or any other storage mechanism) for storing data. Further, a transaction storage device (108a-108n) may include multiple different storage units and/or devices. The multiple different storage units and/or devices may or may not be of the same type or located at the same physical site. In one or more embodiments, a transaction storage device (108a-108n) may be all or part of a computing system, such as, for example, the computing system (600) discussed below in the description of FIG. 6A, or may be all or part of a client device, such as, for example, the client device (626) discussed below in the description of FIG. 6B.

In one or more embodiments, a transaction storage device (108a-108n) includes a data store (118a-118n). In one or more embodiments, a data store (118a-118n) stores information about transactions. Examples of data stores (118a-118n) include personal financial management applications, such as Mint^{®} (Mint is a trademark of Intuit, Inc., Mountain View, CA), and business management applications, such as Intuit^{®} QuickBooks Online^{®} (Intuit and QuickBooks Online are trademarks of Intuit, Inc., Mountain View, CA), that store information about transactions of users (102a-102n) and enable users (102a-102n) to manage their financial activities.

In one or more embodiments of the invention, the registry (106) includes any type of storage unit and/or device (*e.g.,* a file system, database, collection of tables, or any other storage mechanism) for storing data. Further, the registry (106) may include multiple different storage units and/or devices. The multiple different storage units and/or devices may or may not be of the same type or located at the same physical site. In one or more embodiments, the registry (106) may be all or part of a computing system, such as, for example, the computing system (600) discussed below in the description of FIG. 6A.

In one or more embodiments, the registry (106) includes a data store map (112). In one or more embodiments, the data store map (112) includes a mapping of secure identifiers (116a-116x) to universal resource identifiers (URIs) of data stores (120a-120n). In other words, a URI of a data store (120a-120n) is registered with a corresponding secure identifier (116a-116x), indicating which data store (118a-118n) is designated to store detailed transactions corresponding to the secure identifier (116a-116x). In one or more embodiments, a URI is a string of characters used to identify a resource. For example, the resource may be the data store (118a-118n) and the URI may include an address (*e.g.,* network location) of the data store (118a-118n). In one or more embodiments, a secure identifier (116a-116x) may correspond to a user identifier. In one or more embodiments, a user identifier may have a type. In one or more embodiments, a secure identifier (116a-116x) may have the same type as the user identifier corresponding to the secure identifier (116a-116x). Examples of types of user identifiers may include financial instruments (*e.g.,* credit card numbers), email addresses, usernames, customer loyalty numbers, telephone numbers, etc.

In one or more embodiments, a data store (118a-118n) may contain information (*e.g.,* information about detailed transactions) corresponding to a secure identifier (116a-116x). A specific data store (118a-118n) may contain information corresponding to multiple secure identifiers (116a-116x). In one or more embodiments, a data store (118a-118n) includes functionality to process a request to push (e.g., store) detailed transactions corresponding to a secure identifier (116a-116x).

In one or more embodiments, a secure identifier (116a-116x) may be generated from the user identifier via an encoding function. In one or more embodiments, the encoding function is a hash function. For example, a secure identifier (116a-116x) may be generated from the user identifier via a one-way hash function that converts a variable-length input into a fixed-length binary sequence, such that it may be infeasible to retrieve the user identifier from the hashed binary sequence. In one or more embodiments, the user identifier is first converted into a standardized format before applying the hash function. For example, if the user identifier is an email address, converting to the standardized format may remove all whitespace and/or special characters from the email address, and/or representing the email address using all lowercase letters. As another example, if the user identifier is a payment card number, converting to the standardized format may append a four-digit expiration date associated with the payment card to the payment card number.

Alternatively, other encoding and/or cryptographic techniques (*e.g.,* encryption techniques) may be used to generate a secure identifier (116a-116x) from a user identifier, in order to provide a layer of security to protect potentially sensitive user identifiers (e.g., credit card numbers).

In one or more embodiments, the registry (106) includes functionality to process a request from a user (102a-102n) to register a URI of a data store (120a-120n) with a secure identifier (116a-116k) generated from a user identifier. In one or more embodiments, the registry (106) includes functionality to process a request *(e.g.,* from a service provider (104a-104n)) to lookup a URI of a data store (120a-120n) registered with a secure identifier (116a-116k).

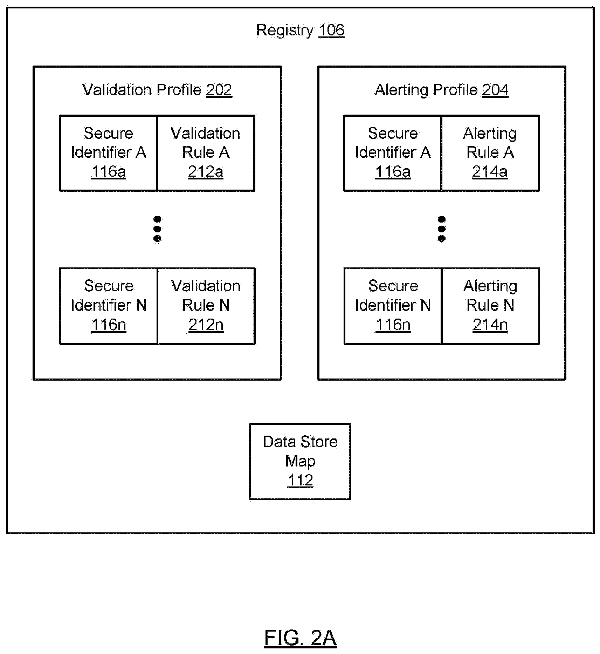

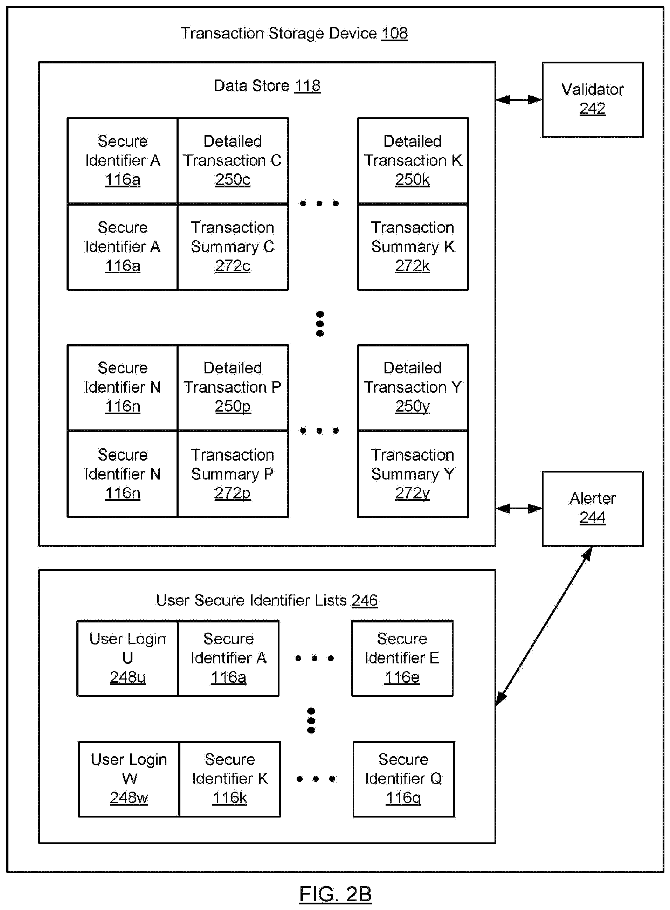

Turning to FIG. 2A, in one or more embodiments, the registry (106) includes, in addition to the aforementioned data store map (112), a validation profile (202), and an alerting profile (204). In one or more embodiments, an entry in the validation profile (202) may include a secure identifier (116a-116k) and a validation rule (212a-212n). In one or more embodiments, a validation rule (212a-212n) may specify a particular validation procedure be used to validate a detailed transaction included when a specific secure identifier (116a-116n) is included in a request. In one or more embodiments, an entry in the alerting profile (204) may include a secure identifier (116a-116k) and an alerting rule (214a-214n). In one or more embodiments, an alerting rule (214a-214n) may specify particular conditions that trigger an alert regarding a detailed transaction corresponding to a specific secure identifier (116a-116n) (*e.g.,* to the user (102a-102n) corresponding to the secure identifier (116a-116k), where the user (102a-102n) may be identified via the user secure identifier lists (246) shown in FIG. 2B, as discussed below).

In one or more embodiments, multiple validation rules (212a-212n) may be associated with a secure identifier (116a-116k). For example, different validation rules (210a-210n) may specify different conditions under which different validation procedures are triggered, relative to a specific secure identifier (116a-116k). Similarly, multiple alerting rules (214a-214n) may be associated with a secure identifier (116a-116k).

Turning to FIG. 2B, in one or more embodiments, a transaction storage device (108) includes a data store (118), a validator (242), an alerter (244), and user secure identifier lists (246). In one or more embodiments, the data store (118) includes a set of detailed transactions (250c-250y) corresponding to each secure identifier (116a-116n). A detailed transaction (250c-250y) may describe products and/or services received by a user (102a-102n) from a service provider (104a-104n). In one or more embodiments, the data store (118) includes a set of transaction summaries (272c-272y) corresponding to each secure identifier (116a-116n). In one or more embodiments, each entry in the user secure identifier lists (246) includes a user login (248u-248w) and a list of secure identifiers (e.g., (116a-116e), (116k-116q)) associated with the user login (248u-248w) corresponding to a user (102a-102n) with an account in the data store (118).

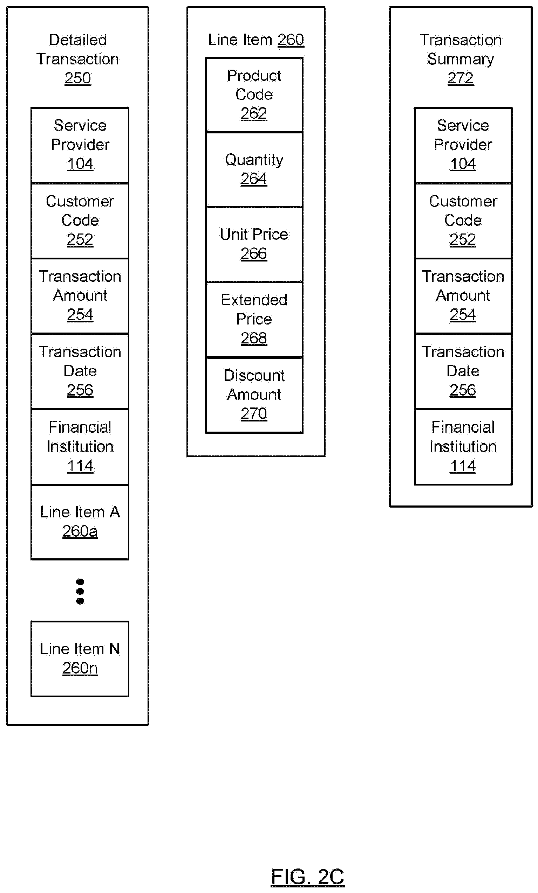

Turning to FIG. 2C, in one or more embodiments, a detailed transaction (250) may correspond to and/or augment Level 3 data used in the credit card industry, and may include the following information: service provider (104), customer code (252), transaction amount (254), transaction date (256), financial institution (114), and a set of line items (260a-260n). In one or more embodiments, the customer code (252) allows a cardholder *(e.g.,* a corporate cardholder) to track purchases made with the user identifier (*e.g.,* credit card number) corresponding to the secure identifier (116a-116n). For example, different employees of a company may have access to a company credit card, and may be assigned different customer codes (252). In one or more embodiments, the customer code (252) may be any identifier associated with a customer (*e.g*., any identifier associated with the user (102a-102n). In one or more embodiments, a detailed transaction (250) may also include the following information: tax amount, invoice number, order number, etc. For example, the financial institution (114) may effect a transfer of funds between an account of a user (102a-102n) and an account of a service provider (104a-104n), relative to a detailed transaction (250) describing products and/or services provided by the service provider (104a-104n) to the user (102a-102n).

In one or more embodiments, the information about each line item (260) may include a product code (262), quantity (264), unit price (266), extended price (268), and item discount amount (270). In one or more embodiments, the information about each line item (260) may also include: a commodity code, item description, unit of measure, shipping cost, item total amount, etc.

Continuing with FIG. 2C, in one or more embodiments, a transaction summary (272) may correspond to and/or augment Level 2 data used in the credit card industry, and may include the following information: service provider (104), customer code (252), transaction amount (254), transaction date (256), financial institution (114), etc.

Returning to FIG. 2B, in one or more embodiments, a validation rule (212a-212n) may specify that a particular validation procedure be used by the validator (242) of the transaction storage device (108) of FIG. 2B, based on a specific secure identifier (116a-116n) included in a request. For example, a validation rule (212a-212n) corresponding to one secure identifier (116a-116n) may specify that a detailed transaction (250c-250y) may be automatically validated by comparing the detailed transaction (250c-250y) with a corresponding transaction summary (272c-272y). Alternatively, a validation rule (212a-212n) corresponding to another secure identifier (116a-116n) may specify that a detailed transaction (250c-250y) be validated only after one or more participants *(e.g.,* the user (102a-102n), the service provider (104a-104n), and/or a financial institution (114a-114n), such as a bank or credit card processor) of the detailed transaction (250c-250y) have provided explicit approval.

In one or more embodiments, an alerting rule (214a-214n) may specify that a particular alerting procedure be used by the alerter (244) of the transaction storage device (108) of FIG. 2B, based on a specific secure identifier (116a-116n) included in a request. For example, an alerting rule (214a-214n) may specify that an alert be issued when a cost associated with a detailed transaction (250c-250y) exceeds a specific amount. Alternatively, an alerting rule (214a-214n) may specify that that an alert be issued the first N times a new detailed transaction (250c-250y) corresponding to the secure identifier (116a-116n) (*e.g.,* corresponding to a new credit card or bank account) is processed. For example, a user (102a-102n) may have just started using a new user identifier corresponding to the secure identifier (116a-116n), and the user (102a-102n) may decide to closely monitor the first few corresponding detailed transactions (250c-250y) *(e.g.,* to ensure that a new credit card or bank account is uncompromised). Still alternatively, an alerting rule (214a-214n) may specify that that an alert be issued the first N times a new detailed transaction (250c-250y) corresponding to the secure identifier (116a-116n) and a specific service provider (104a-104n) is processed. That is, a user (102a-102n) may have just started doing business with a new service provider (104a-104n), and the user (102a-102n) may decide to closely monitor the first few detailed transactions (250c-250y) corresponding to the new service provider (104a-104n).

In one or more embodiments, multiple validation rules (212a-212n) may be associated with a secure identifier (116a-116n). For example, different validation rules (212a-212n) may specify different conditions under which different validation procedures are triggered, relative to a specific secure identifier (116a-116n). Similarly, multiple alerting rules (214a-214n) may be associated with a secure identifier (116a-116n).

In one or more embodiments, the validator (242) may be implemented in hardware (e.g., circuitry), software, or any combination thereof. In one or more embodiments, the validator (242) includes functionality to evaluate the validity of a detailed transaction (250c-250y). In one or more embodiments, a service provider (104a-104n) includes functionality to provide a request to push a detailed transaction (250c-250y) to a data store (118a-118n) when the validator (242) validates the detailed transaction (250c-250y). In one or more embodiments, the alerter (244) may be implemented in hardware (e.g., circuitry), software, or any combination thereof. In one or more embodiments, the alerter (244) includes functionality to issue an alert (e.g., to the user (102a-102n)) regarding a new detailed transaction (250c-250y).

In one or more embodiments, the registry (106) includes functionality to process a request from a user (102a-102n) to register a data store with a user identifier (e.g., where the data store is registered to a secure identifier (116a-116x) generated from the user identifier). In one or more embodiments, the registry (106) includes functionality to process a request (e.g., from a service provider (104a-104n)) to lookup an address of a data store registered with a secure identifier (116a-116x). In one or more embodiments, the registry (106) includes functionality to process a request (e.g., from a validator (242) of a transaction storage device (108a-108n)) to obtain a validation rule (212a-212n) corresponding to a secure identifier (116a-116x). In one or more embodiments, the registry (106) includes functionality to process a request (e.g., from an alerter (244) of a transaction storage device (108a-108n)) to obtain an alerting rule (214a-214n) corresponding to a secure identifier (116a-116x).

While FIG. 1, FIG. 2A, FIG. 2B, and FIG. 2C show configurations of components, other configurations may be used without departing from the scope of the invention. For example, various components may be combined to create a single component. As another example, the functionality performed by a single component may be performed by two or more components.

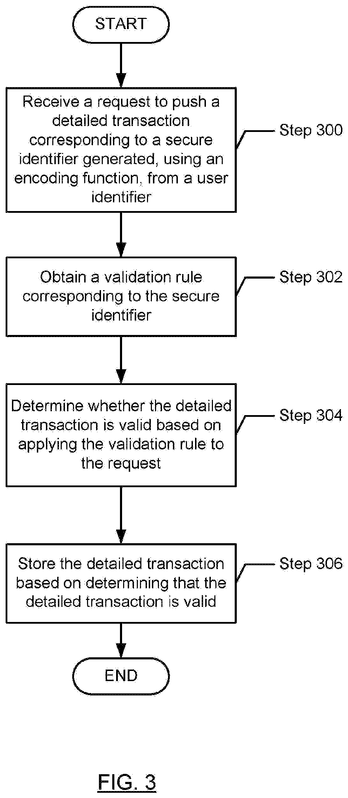

FIG. 3 shows a flowchart in accordance with one or more embodiments of the invention. The flowchart depicts a process for pushing a transaction. In one or more embodiments, the process described in reference to FIG. 3 is practiced using the system (100) *(e.g.,* the registry (106), a transaction storage device (108), a data store (118), the validator (242) and the alerter (244)) described in reference to FIG. 1, FIG. 2A, FIG. 2B, and FIG. 2C above, and/or involving the computing system (600) described in reference to FIG. 6A. In one or more embodiments of the invention, one or more of the steps shown in FIG. 3 may be omitted, repeated, and/or performed in a different order than the order shown in FIG. 3. Accordingly, the scope of the invention should not be considered limited to the specific arrangement of steps shown in FIG. 3.

Initially, in Step 300, a request to push a detailed transaction corresponding to a secure identifier is received. In one or more embodiments, the secure identifier is generated, using an encoding function, from a user identifier of a user. In one or more embodiments, a user may be an individual, business, or other entity that receives products and/or services from a service provider. Examples of user identifiers may include financial instruments (e.g., credit card numbers), email addresses, usernames, customer loyalty numbers, telephone numbers, etc. In one or more embodiments, the encoding function is a hash function. For example, the secure identifier may be generated from the user identifier via a one-way hash function that converts a variable-length input into a fixed-length binary sequence, such that it may be infeasible to retrieve the user identifier from the hashed binary sequence.

In one or more embodiments, the request is received by a data store of a transaction storage device. In one or more embodiments, the request is transmitted by a service provider. In one or more embodiments, the request is transmitted by the user *(e.g.,* the user corresponding to the user identifier). In one or more embodiments, the service provider may obtain an address (e.g., a universal resource identifier (URI)) of the data store by looking up, in the registry, the address of the data store corresponding to the secure identifier. That is, the registry may include a registration indicating the address of the data store registered with the secure identifier. In one or more embodiments, the request may be transmitted via a user interface, email, or an application programming interface (API).

In one or more embodiments, the detailed transaction describes products and/or services received by the user from a service provider. In one or more embodiments, the detailed transaction may include information similar to Level 3 data used in the credit card industry, and may include the following information: service provider, customer code, transaction amount, transaction date, financial institution, and line items.

In Step 302, a validation rule corresponding to the secure identifier is obtained. In one or more embodiments, the validation rule may be obtained from the registry (e.g., where the registry obtained the validation rule from the user corresponding to the user identifier from which the secure identifier was generated). In one or more embodiments, the validation rule may be obtained from an entry in a validation profile corresponding to the secure identifier and stored in the registry. In one or more embodiments, multiple validation rules may correspond to the secure identifier. In one or more embodiments, a validation rule may specify that a particular validation procedure be used *(e.g.,* by the validator of the transaction storage device). For example, a validation rule may specify that the detailed transaction be automatically validated (e.g., by comparing a detailed transaction with a corresponding transaction summary). Alternatively, a validation rule may specify that the detailed transaction be validated only after one or more participants *(e.g.,* the user, the service provider, and/or a financial institution, such as a bank or credit card processor) identified in the detailed transaction have provided explicit approval.

In Step 304, a determination regarding whether the detailed transaction is valid is made. In one or more embodiments, the determination is based, in part, on applying the validation rule to the request. For example, as described above, the validation rule *(e.g.,* when applied to the secure identifier included in the request) may specify that a particular validation procedure be used. In one or more embodiments, the determination is made by validator of the transaction storage device.

In Step 306, the detailed transaction is stored based on the determination indicating that the detailed transaction is valid. In one or more embodiments, the detailed transaction is stored in the data store using the secure identifier. For example, the detailed transaction may be stored in a table of detailed transactions using the secure identifier as an index.

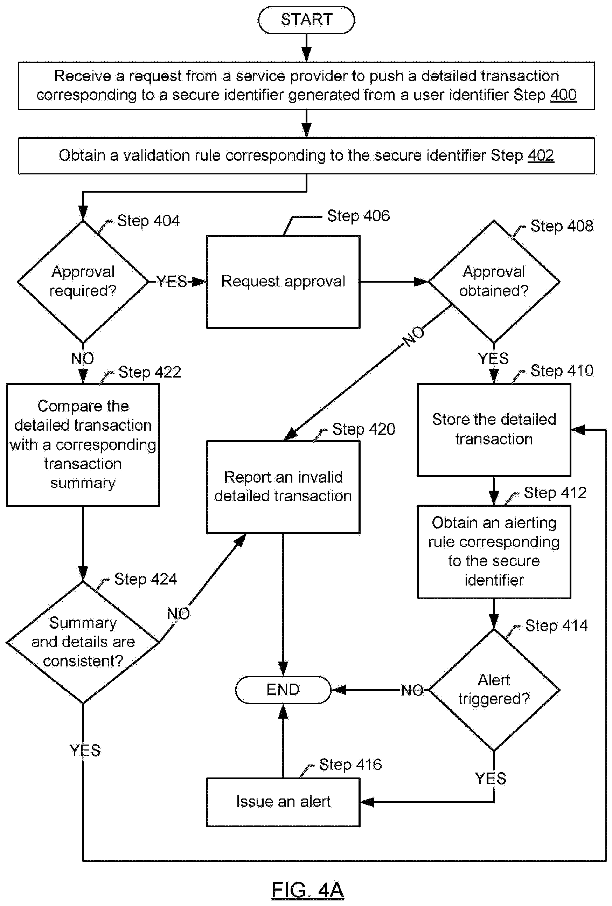

FIG. 4A shows a flowchart in accordance with one or more embodiments of the invention. The flowchart depicts a process for pushing a transaction. In one or more embodiments, the process described in reference to FIG. 4A is practiced using the system (100) *(e.g.,* the registry (106), a transaction storage device (108), a data store (118), the validator (242) and the alerter (244)) described in reference to FIG. 1, FIG. 2A, FIG. 2B, and FIG. 2C above, and/or involving the computing system (600) described in reference to FIG. 6A. In one or more embodiments of the invention, one or more of the steps shown in FIG. 4A may be omitted, repeated, and/or performed in a different order than the order shown in FIG. 4A. Accordingly, the scope of the invention should not be considered limited to the specific arrangement of steps shown in FIG. 4A.

Initially, in Step 400, a request to push a detailed transaction corresponding to a secure identifier is received (see description above of Step 300 in FIG. 3).

In Step 402, a validation rule corresponding to the secure identifier is obtained (see description above of Step 302 in FIG. 3).

In Step 404, the validation rule is applied to the request received in Step 400 above. In one or more embodiments, applying the validation rule indicates that an approval-based validation procedure is to be used to validate the detailed transaction, based on approvals from one or more entities. In one or more embodiments, applying the validation rule indicates that an automatic validation procedure is to be used to validate the detailed transaction, based on satisfying one or more criteria.

If, in Step 404, it is determined, based on applying the validation rule, that approval of the request to push the detailed transaction is required, then in Step 406, approval is requested from one or more entities, in accordance with the validation rule. In one or more embodiments, approval may be requested from the user, a financial institution identified in the detailed transaction, the service provider, and/or any other entity (e.g., an accounting department of the user that monitors purchases related to the user identifier corresponding to the secure identifier). In one or more embodiments, the approving entity may be a financial institution such as a bank or credit card company, that may have already been authenticated (e.g., by the data store that is the recipient of the request of Step 400 above). In one or more embodiments, the approving entity may be authenticated using a digital signature and/or digital certificate (e.g., based on public key encryption). In one or more embodiments, the digital signature and/or digital certificate may have been obtained by the data store while processing other transactions (e.g., banking or credit card transactions) with the approving entity. For example, it may be assumed that when the approving entity is a financial institution, the approving entity will have previously verified the identity of the service provider now attempting to push the detailed transaction. Therefore, verifying the identity of the approving entity (e.g., the financial institution) may be sufficient to verify the identity of the service provider.

Otherwise, if Step 404 determines, applying the validation rule, that automatic validation is required (e.g., validation without explicit approvals from various entities), then execution proceeds with Step 422 below.

If, in Step 408, it is determined that the required approvals have been obtained, then the detailed transaction is considered to be valid, and in Step 410, the detailed transaction is stored (see description above of Step 306 in FIG. 3).

Otherwise, if Step 408 determines that the required approvals have not been obtained, then the detailed transaction is considered to be invalid, and in Step 420, the request to push the detailed transaction is rejected, and an error report is generated regarding the invalid transaction. For example, it may be determined that the required approvals have not been obtained if an entity whose approval is required explicitly rejects the request for approval. Alternatively, it may be determined that the required approvals have not been obtained if an entity whose approval is required fails to approve the request within a predetermined period of time. In one or more embodiments, the error report is transmitted to one or more entities (e.g., to the user).

In Step 412, an alerting rule corresponding to the secure identifier is obtained. In one or more embodiments, the alerting rule may be obtained from the registry. In one or more embodiments, the alerting rule may be set by a user. For example, the registry may have obtained the alerting rule from the user corresponding to the user identifier from which the secure identifier was generated. In one or more embodiments, the alerting rule may be obtained from an entry in an alerting profile corresponding to the secure identifier and stored in the registry. In one or more embodiments, multiple alerting rules may correspond to the secure identifier. In one or more embodiments, an alerting rule may specify that a particular alerting procedure be used *(e.g.,* by the alerter of the transaction storage device). For example, an alerting rule may specify that an alert be issued when the transaction cost associated with the detailed transaction exceeds a specific amount. Alternatively, an alerting rule may specify that that an alert be issued the first N times a new detailed transaction corresponding to the secure identifier is processed.

In Step 414, the alerting rule is applied to the request received in Step 400 above. If, in Step 414, it is determined, based on applying the alerting rule, that an alert should be issued regarding the detailed transaction, then in Step 416, an alert is issued, in accordance with the alerting rule. For example, the alerting rule may indicate that the alert should be issued to the user corresponding to the secure identifier of the push request. In one or more embodiments, the user corresponding to the secure identifier of the push request may be identified based on a user secure identifier list maintained by the data store for its users. In one or more embodiments, the data store may include a list of secure identifiers corresponding to each user login of the data store. For example, the list of secure identifiers may be generated, using the encoding function, from a list of user identifiers corresponding to detailed transactions stored by the data store on behalf of a specific user login of the data store. In one or more embodiments, an alerter (e.g., an alerter of the transaction storage device that includes the data store which received the request in Step 400 above) determines whether the alert should be triggered.

As another example, an alerting rule may indicate that the alert should be issued to some other entity relevant to the detailed transaction (e.g., an accounting department of the user that monitors purchases related to the user identifier corresponding to the secure identifier).

In Step 422, the detailed transaction is compared with a corresponding transaction summary. In one or more embodiments, a transaction summary is generated by a financial institution (e.g., a bank, a credit card company, etc.) identified in the detailed transaction. In one or more embodiments, the transaction summary may include information similar to Level 2 data used in the credit card industry, and may include the following information: service provider, customer code, transaction amount, transaction date, financial institution, etc.

If, in Step 424, it is determined that the detailed transaction is consistent with the transaction summary, then the detailed transaction is considered to be validated, and execution proceeds with Step 410 above. Otherwise, if Step 424 determines that the detailed transaction is inconsistent with the transaction summary, then the detailed transaction is considered to be invalid, and in Step 420, the request to push the detailed transaction is rejected, and an error report regarding the invalid transaction is transmitted (e.g., to the user). In one or more embodiments, the error report may include proposed adjustments to the detailed transaction to remove the inconsistency between the detailed transaction and the transaction summary. For example, a proposed adjustment may include adjusting one or more quantities of the line items of the detailed transaction.

In one or more embodiments, the detailed transaction is inconsistent with the transaction summary when the transaction cost of the transaction summary is inconsistent with the aggregated costs *(e.g.,* the extended costs) of the line items of the detailed transaction (e.g., including tax considerations). In one or more embodiments, the detailed transaction is inconsistent with the transaction summary when the transaction date of the transaction summary is inconsistent with the transaction date of the detailed transaction.

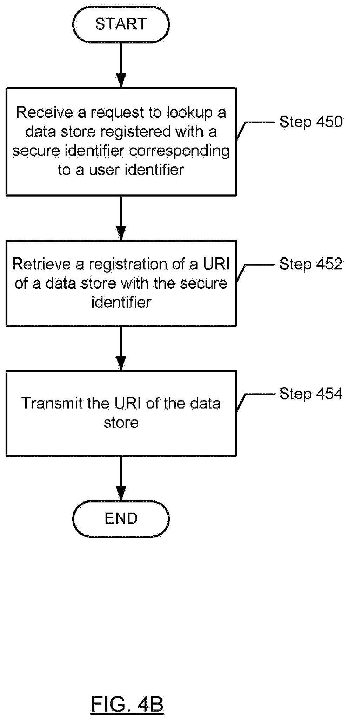

FIG. 4B shows a flowchart in accordance with one or more embodiments of the invention. The flowchart depicts a process for accessing an address of a data store. In one or more embodiments, the process described in reference to FIG. 4B is practiced using the system (100) (e.g., the registry (106), a transaction storage device (108), a data store (118), the validator (242) and the alerter (244)) described in reference to FIG. 1, FIG. 2A, FIG. 2B, and FIG. 2C above, and/or involving the computing system (600) described in reference to FIG. 6A. In one or more embodiments of the invention, one or more of the steps shown in FIG. 4B may be omitted, repeated, and/or performed in a different order than the order shown in FIG. 4B. Accordingly, the scope of the invention should not be considered limited to the specific arrangement of steps shown in FIG. 4B.

Initially, in Step 450, a request to lookup a data store registered with a secure identifier is received. In one or more embodiments, the data store is designated (e.g., by a user corresponding to a user identifier from which the secure identifier was generated) to store detailed transactions corresponding to the secure identifier. In one or more embodiments, the secure identifier is generated (e.g., by the entity transmitting the request), using an encoding function, from a user identifier of a user. In one or more embodiments, the encoding function is a hash function. In one or more embodiments, the request may be received by the registry. In one or more embodiments, the request may be transmitted by a service provider. In one or more embodiments, the request may be transmitted by a user.

In Step 452, a registration of a URI of the data store with the secure identifier is retrieved. In one or more embodiments, the retrieval is performed by the registry. In one or more embodiments, the registry retrieves the registration from the data store map, which maps secure identifiers to URIs of data stores.

In Step 454, the URI of the data store registered with the secure identifier is transmitted. In one or more embodiments, the URI is transmitted to the entity who transmitted the request of Step 450 above, thereby enabling the entity to push a detailed transaction (e.g., in Step 400 of FIG. 4A) corresponding to the secure identifier to the data store.

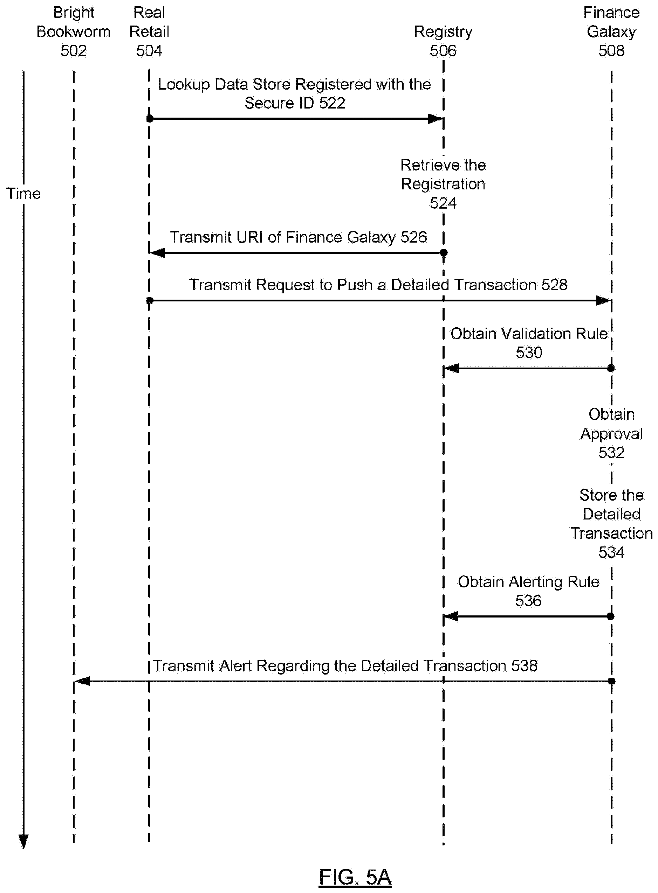

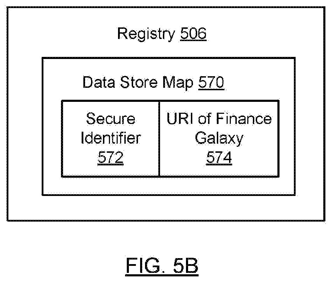

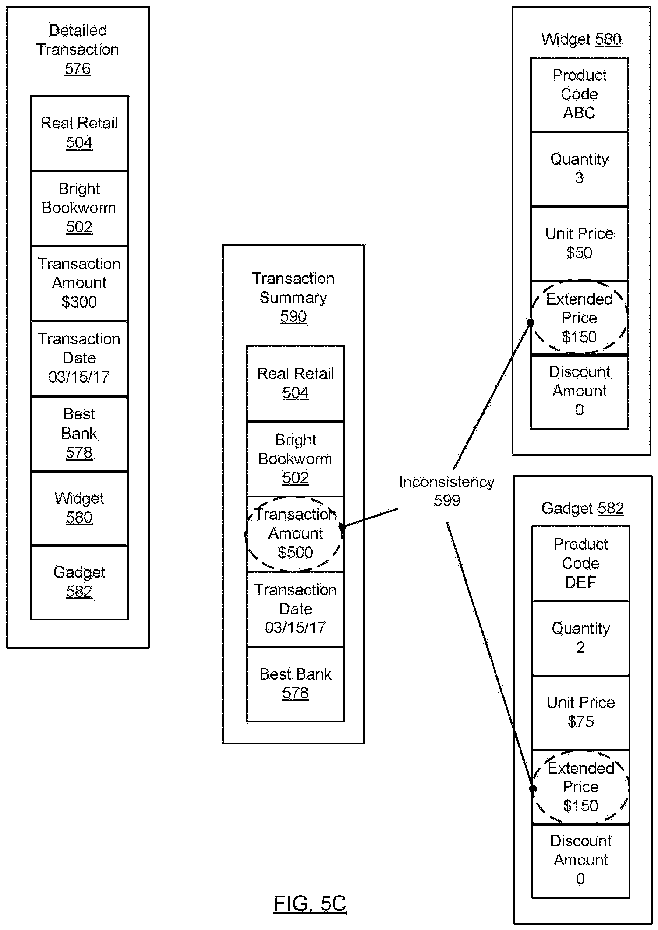

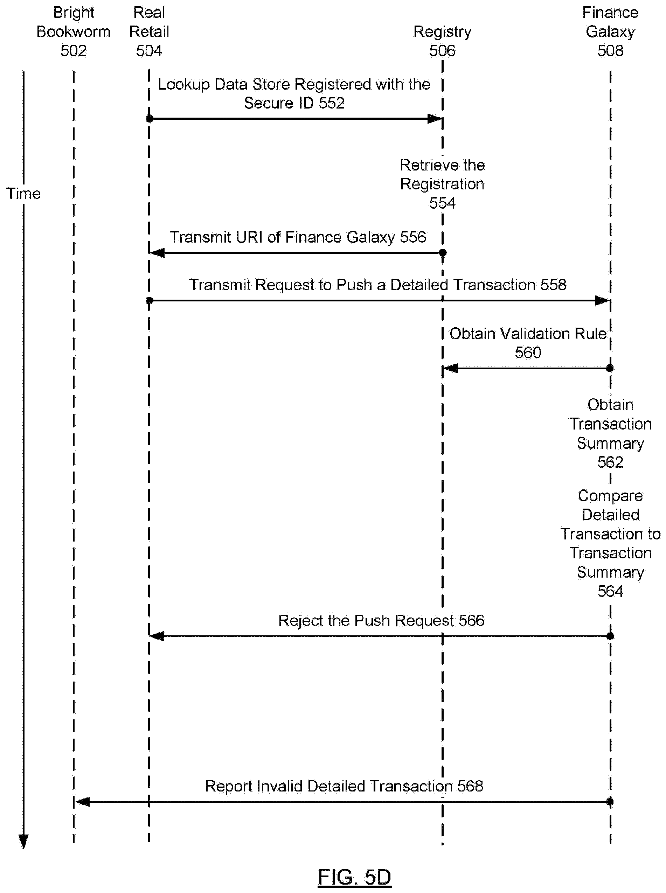

The following example is for explanatory purposes only and not intended to limit the scope of the invention. FIG. 5A, FIG. 5B, FIG. 5C, and FIG. 5D show an implementation example in accordance with one or more embodiments of the invention.

FIG. 5A illustrates, in accordance with one or more embodiments, the relative timing of steps performed by one or more components described in reference to FIG. 1, FIG. 2A, FIG. 2B, and FIG. 2C, in accordance with the flowcharts in FIG. 3, FIG. 4A, and FIG. 4B. These components include: Bright Bookworm, a small bookseller that is a user (502) ((102a-102n) in FIG. 1), Real Retail, a service provider (504) ((104a-104n) in FIG. 1), a registry (506) ((106) in FIG. 1), and Finance Galaxy (508), a financial application with data store capabilities.

Initially, in Step 522, the registry (506) receives a request, from online retailer Real Retail (504), to lookup a data store registered with a secure identifier. Real Retail (504) transmits this request in order to find out the address of the data store that Real Retail (504) should use to push a detailed transaction corresponding to the secure identifier. The secure identifier was generated, via a hash function, from a user identifier of Bright Bookworm (502), who has just purchased several items from Real Retail (504). In this case, the user identifier is a credit card number used by Bright Bookworm (502) to make the purchase.

In Step 524, in response to the lookup request, the registry (506) retrieves a registration of a URI of Finance Galaxy (574) with the secure identifier. FIG. 5B shows the registration of the URI of Finance Galaxy (574) with the secure identifier (572) in a data store map (570) of the registry (506).

In Step 526, the registry (506) then transmits the URI of Finance Galaxy (508) to Real Retail (504).

In Step 528, Real Retail (504) transmits to Finance Galaxy (508) a request to push a detailed transaction corresponding to Bright Bookworm's (502) purchase. The detailed transaction (576) is shown in FIG. 5C, and includes the items (580, 582) purchased by Bright Bookworm (502).

In Step 530, Finance Galaxy (508) obtains, from the registry, a validation rule corresponding to the secure identifier. The validation rule specifies that the detailed transaction be validated only after a financial institution of the detailed transaction has provided explicit approval. In this case, as shown in FIG. 5C, the financial institution of the detailed transaction (576) is Best Bank (578).

In Step 532, Finance Galaxy (508) obtains approval of the detailed transaction (576) from the financial institution Best Bank (578). Finance Galaxy (508) had already verified the identity of Best Bank (578) (e.g., using a digital certificate obtained from Best Bank (578)), since Finance Galaxy (508) processes authenticated transactions with Best Bank (578) on a frequent basis.

In an alternate scenario where Finance Galaxy (508) is unable to obtain the required approval, then the detailed transaction (576) would be considered to be invalid, and the request to push the detailed transaction (576) would be rejected. An error report regarding the invalid detailed transaction (576) would then be sent *(e.g.,* to the user Bright Bookworm (502)).

In Step 534, Finance Galaxy (508) stores the detailed transaction (576), now that the detailed transaction (576) has been validated.

In Step 536, Finance Galaxy (508) obtains, from the registry, an alerting rule corresponding to the secure identifier. The alerting rule specifies that an alert be issued when the transaction cost associated with the detailed transaction (576) exceeds $250. In this case, as shown in FIG. 5C, the transaction cost of the detailed transaction (576) does exceed $250.

In Step 538, Finance Galaxy (508) therefore transmits an alert regarding the detailed transaction (576) to Bright Bookworm (502) *(e.g.,* so that Bright Bookworm (502) can monitor its pushed detailed transactions). Finance Galaxy (508) identifies Bright Bookworm (502) as being associated with the secure identifier (572) of the detailed transaction (576) based on a list of secure identifiers corresponding to the login information of Bright Bookworm (502). The list of secure identifiers was generated, using the hash function, from a list of user identifiers (e.g., email addresses, payment cards, etc.) used by Bright Bookworm (502) in other transactions stored by Finance Galaxy (508) on behalf of Bright Bookworm (502).

FIG. 5D illustrates, in accordance with one or more embodiments, the relative timing of steps performed by one or more components described in reference to FIG. 1, FIG. 2A, FIG. 2B, and FIG. 2C, in accordance with the flowcharts in FIG. 3, FIG. 4A, and FIG. 4B. These components include: Bright Bookworm, a user (502) ((102a-102n) in FIG. 1), Real Retail, a service provider (504) ((104a-104n) in FIG. 1), the registry (506) ((106) in FIG. 1), and Finance Galaxy, a data store (508) ((118a-118n) in FIG. 1).

Initially, in Step 552, the registry (506) receives a request, from Real Retail (504), to lookup a data store registered with a secure identifier (see description above of Step 522 in FIG. 5A).

In Step 554, in response to the lookup request, the registry (506) retrieves, a registration of Finance Galaxy (508) with the secure identifier (see description above of Step 524 in FIG. 5A).

In Step 556, the registry (506) then transmits the address of Finance Galaxy (508) to Real Retail (504) (see description above of Step 526 in FIG. 5A).

In Step 558, Real Retail (504) transmits to Finance Galaxy (508) a request to push a detailed transaction corresponding to Bright Bookworm's (502) purchase (see description above of Step 528 in FIG. 5A).

In Step 560, Finance Galaxy (508) obtains, from the registry, a validation rule corresponding to the secure identifier. The validation rule specifies that the detailed transaction be automatically validated by comparing the detailed transaction with a corresponding transaction summary, where the transaction summary is generated by the financial institution that processed the payment corresponding to the detailed transaction. Finance Galaxy (508) then identifies the financial institution, Best Bank (578), in the detailed transaction (576), as shown in FIG. 5C.

In Step 562, Finance Galaxy (508) obtains a transaction summary (590) corresponding to the detailed transaction (576), as shown in FIG. 5C. It turns out that Finance Galaxy (508) already included a transaction summary (590) generated by Best Bank (578). In an alternate scenario, if Finance Galaxy (508) did not already include the transaction summary (590), then Finance Galaxy (508) would request the transaction summary (590) from Best Bank (578).

In Step 564, Finance Galaxy (508) compares the detailed transaction to the transaction summary, and detects an inconsistency (599) between the extended amounts of the line items (580, 582) of the detailed transaction (576) and the transaction amount of the transaction summary (590).

In Step 566, Finance Galaxy (508) transmits a rejection of the push request to Real Retail (504). Finance Galaxy (508) includes, with the rejection, an error report describing the inconsistency detected in Step 564 above.

In Step 568, Finance Galaxy (508) reports the invalid detailed transaction and the inconsistency to Bright Bookworm (502). In an alternate scenario, Finance Galaxy (508) reports the invalid detailed transaction (576) when an alerting rule (see description above of Step 536 in FIG. 5A) corresponding to the secure identifier of the detailed transaction (576) indicates that an alert should be issued for invalid transactions.

Embodiments disclosed herein may be implemented on a computing system. Any combination of mobile, desktop, server, router, switch, embedded device, or other types of hardware may be used. For example, as shown in FIG. 6A, the computing system (600) may include one or more computer processors (602), non-persistent storage (604) (e.g., volatile memory, such as random access memory (RAM), cache memory), persistent storage (606) *(e.g.,* a hard disk, an optical drive such as a compact disk (CD) drive or digital versatile disk (DVD) drive, a flash memory, etc.), a communication interface (612) (e.g., Bluetooth interface, infrared interface, network interface, optical interface, etc.), and numerous other elements and functionalities.

The computer processor(s) (602) may be an integrated circuit for processing instructions. For example, the computer processor(s) may be one or more cores or micro-cores of a processor. The computing system (600) may also include one or more input devices (610), such as a touchscreen, keyboard, mouse, microphone, touchpad, electronic pen, or any other type of input device.

The communication interface (612) may include an integrated circuit for connecting the computing system (600) to a network (not shown) (e.g., a local area network (LAN), a wide area network (WAN) such as the Internet, mobile network, or any other type of network) and/or to another device, such as another computing device.

Further, the computing system (600) may include one or more output devices (608), such as a screen *(e.g.,* a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to the computer processor(s) (602), non-persistent storage (604), and persistent storage (606). Many different types of computing systems exist, and the aforementioned input and output device(s) may take other forms.

Software instructions in the form of computer readable program code to perform embodiments disclosed herein may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments disclosed herein.

The computing system (600) in FIG. 6A may be connected to or be a part of a network. For example, as shown in FIG. 6B, the network (620) may include multiple nodes (e.g., node X (622), node Y (624)). Each node may correspond to a computing system, such as the computing system shown in FIG. 6A, or a group of nodes combined may correspond to the computing system shown in FIG. 6A. By way of an example, embodiments disclosed herein may be implemented on a node of a distributed system that is connected to other nodes. By way of another example, embodiments disclosed herein may be implemented on a distributed computing system having multiple nodes, where each portion disclosed herein may be located on a different node within the distributed computing system. Further, one or more elements of the aforementioned computing system (600) may be located at a remote location and connected to the other elements over a network.

Although not shown in FIG. 6B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (622), node Y (624)) in the network (620) may be configured to provide services for a client device (626). For example, the nodes may be part of a cloud computing system. The nodes may include functionality to receive requests from the client device (626) and transmit responses to the client device (626). The client device (626) may be a computing system, such as the computing system shown in FIG. 6A. Further, the client device (626) may include and/or perform all or a portion of one or more embodiments disclosed herein.

The computing system or group of computing systems described in FIG. 6A and 6B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file.

The computing system in FIG. 6A may implement and/or be connected to a data repository. For example, one type of data repository is a database. A database is a collection of information configured for ease of data retrieval, modification, reorganization, and deletion. Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (e.g. join, full join, count, average, etc.), sort (e.g. ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The above description of functions present only a few examples of functions performed by the computing system of FIG. 6A and the nodes and/ or client device in FIG. 6B. Other functions may be performed using one or more embodiments disclosed herein.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A system, comprising:
a registry;
a service provider; and
a plurality of transaction storage devices, each transaction storage device of the plurality of transaction storage devices comprising:
a data store configured to:
receive a request, from the service provider, to push a detailed transaction corresponding to a secure identifier, wherein the secure identifier is generated, using an encoding function, from a user identifier of a user; and
store the detailed transaction based on a determination that the detailed transaction is valid; and
a validator configured to:
obtain, from the registry, a validation rule corresponding to the secure identifier; and
perform the determination, wherein the determination comprises applying the validation rule to the request; wherein the registry, is configured to store at least the validation rule, and wherein the service provider is configured to provide the request to push the detailed transaction to the data store when the validator validates the detailed transaction.

2. The system of claim 1, wherein the registry is further configured to:
receive, from the service provider, a request to lookup a first data store registered with the secure identifier;
retrieve a universal resource identifier (URI) of the first data store in response to the request to lookup the first data store; and
transmit, to the service provider, the URI of the first data store.

3. The system of claim 1, wherein the determination further comprises:
obtaining approval of the detailed transaction from an entity identified in the detailed transaction.

4. The system of claim 1, wherein the determination further comprises:
obtaining a transaction summary corresponding to the detailed transaction; and
comparing the detailed transaction with the transaction summary.

5. The system of claim 4, wherein the transaction summary is generated by an entity identified in the detailed transaction, wherein the entity is not the service provider.

6. The system of claim 4, wherein the validator is further configured to:
detect an inconsistency between the detailed transaction and the transaction summary; and
generate an error report describing the inconsistency.

7. The system of claim 1, wherein the registry is further configured to store an alerting rule corresponding to the secure identifier, the system further comprising an alerter configured to:
obtain the alerting rule from the registry; and
transmit, based on applying the alerting rule to the detailed transaction, an alert to the user.

8. A method, comprising:
receiving at a data store of a transaction storage device from a service provider a request to push a detailed transaction corresponding to a secure identifier, wherein the secure identifier is generated, using an encoding function, from a user identifier of a user;
obtaining at a validator of the transaction storage device from a registry validation rule corresponding to the secure identifier;
determining, based on applying the validation rule to the request, whether the detailed transaction is valid; and
storing in the data store the detailed transaction based on determining that the detailed transaction is valid wherein the service provider provides the request to push the detailed transaction to the data store when the validator validates the detailed transaction.

9. The method of claim 8, further comprising:
receiving a request to lookup a first data store registered with the secure identifier;
retrieving a universal resource identifier (URI) of the first data store in response to the request to lookup the first data store; and
transmitting the URI of the data store.

10. The method of claim 8, wherein determining whether the detailed transaction is valid comprises:
obtaining approval of the detailed transaction from an entity identified in the detailed transaction.

11. The method of claim 8, wherein determining whether the detailed transaction is valid comprises:
obtaining a transaction summary corresponding to the detailed transaction; and
comparing the detailed transaction with the transaction summary.

12. The method of claim 11, wherein the transaction summary is generated by an entity identified in the detailed transaction, wherein the entity is not the service provider.

13. The method of claim 11, further comprising:
detecting an inconsistency between the detailed transaction and the transaction summary; and
generating an error report comprising the inconsistency.

14. A non-transitory computer readable medium comprising instructions that, when executed by a computer processor, perform each of the method steps of claims 8 to 13.

## Patentansprüche

1. System, das Folgendes umfasst:
ein Register;
einen Dienstanbieter und
mehrere Transaktionsspeichervorrichtungen, wobei jede Transaktionsspeichervorrichtung der mehreren Transaktionsspeichervorrichtungen Folgendes umfasst:
einen Datenspeicher, der konfiguriert ist zum:
Empfangen einer Anforderung vom Dienstanbieter, eine detailreiche Transaktion, die einer sicheren Kennung entspricht, zu schieben, wobei die sichere Kennung unter Verwendung einer Codierungsfunktion aus einer Anwenderkennung eines Anwenders erzeugt wird; und
Speichern der detailreichen Transaktion auf der Grundlage einer Bestimmung, dass die detailreiche Transaktion gültig ist; und
eine Prüfeinrichtung, die konfiguriert ist zum:
Erhalten aus dem Register einer Gültigkeitsregel, die der sicheren Kennung entspricht; und
Durchführen der Bestimmung, wobei die Bestimmung ein Anwenden der Gültigkeitsregel auf die Anforderung umfasst; wobei
das Register konfiguriert ist, mindestens die Gültigkeitsregel zu speichern, und der Dienstanbieter konfiguriert ist, die Anforderung bereitzustellen, die detailreiche Transaktion zum Datenspeicher zu schieben, wenn die Prüfeinrichtung die detailreiche Transaktion für gültig erklärt.

2. System nach Anspruch 1, wobei das Register ferner konfiguriert ist zum:
Empfangen vom Dienstanbieter einer Anforderung, einen ersten Datenspeicher nachzuschlagen, der mit der sicheren Kennung registriert ist;
Abrufen einer universellen Betriebsmittelkennung (URI) des ersten Datenspeichers in Reaktion auf die Anforderung, den ersten Datenspeicher nachzuschlagen;
und
Senden zum Dienstanbieter der URI des ersten Datenspeichers.

3. System nach Anspruch 1, wobei die Bestimmung ferner Folgendes umfasst:
Erhalten einer Bestätigung der detailreichen Transaktion von einer Einheit, die in der detailreichen Transaktion identifiziert wird.

4. System nach Anspruch 1, wobei die Bestimmung ferner Folgendes umfasst:
Erhalten einer Transaktionszusammenfassung, die der detailreichen Transaktion entspricht; und
Vergleichen der detailreichen Transaktion mit der Transaktionszusammenfassung.

5. System nach Anspruch 4, wobei die Transaktionszusammenfassung durch eine Einheit erzeugt wird, die in der detailreichen Transaktion identifiziert wird, und die Einheit nicht der Dienstanbieter ist.

6. System nach Anspruch 4, wobei die Prüfeinrichtung ferner konfiguriert ist zum:
Detektieren einer Inkonsistenz zwischen der detailreichen Transaktion und der Transaktionszusammenfassung und
Detektieren einer Inkonsistenz zwischen der detailreichen Transaktion und der Transaktionszusammenfassung und

7. System nach Anspruch **1,** wobei das Register ferner konfiguriert ist, eine Warnungsregel zu speichern, die der sicheren Kennung entspricht, und das System ferner einen Warner umfasst, der konfiguriert ist zum:
Erhalten der Warnungsregel aus dem Register und
Senden auf der Grundlage des Anwendens der Warnungsregel auf die detailreiche Transaktion einer Warnung zum Anwender.

8. Verfahren, das Folgendes umfasst:
Empfangen bei einem Datenspeicher einer Transaktionsspeichervorrichtung von einem Dienstanbieter einer Anforderung, eine detailreiche Transaktion, die einer sicheren Kennung entspricht, zu schieben, wobei die sichere Kennung unter Verwendung einer Codierungsfunktion aus einer Anwenderkennung eines Anwenders erzeugt wird;
Erhalten bei einer Prüfeinrichtung der Transaktionsspeichervorrichtung aus einem Register einer Gültigkeitsregel, die der sicheren Kennung entspricht;
Bestimmen auf der Grundlage des Anwendens der Gültigkeitsregel auf die Anforderung, ob die detailreiche Transaktion gültig ist; und
Speichern im Datenspeicher der detailreichen Transaktion auf der Grundlage des Bestimmens, dass die detailreiche Transaktion gültig ist,
wobei der Dienstanbieter die Anforderung, die detailreiche Transaktion zum Datenspeicher zu schieben, bereitstellt, wenn die Prüfeinrichtung die detailreiche Transaktion für gültig erklärt.

9. Verfahren nach Anspruch 8, das ferner Folgendes umfasst:
Empfangen einer Anforderung, in einem ersten Datenspeicher nachzuschlagen, der mit der sicheren Kennung registriert ist;
Abrufen einer universellen Betriebsmittelkennung (URI) des ersten Datenspeichers in Reaktion auf die Anforderung, den ersten Datenspeicher nachzuschlagen;
und
Senden der URI des Datenspeichers.

10. Verfahren nach Anspruch 8, wobei das Bestimmen, ob die detailreiche Transaktion gültig ist, Folgendes umfasst:
Erhalten einer Bestätigung der detailreichen Transaktion von einer Einheit, die in der detailreichen Transaktion identifiziert wird.

11. Verfahren nach Anspruch 8, wobei das Bestimmen, ob die detailreiche Transaktion gültig ist, Folgendes umfasst:
Erhalten einer Transaktionszusammenfassung, die der detailreichen Transaktion entspricht; und
Vergleichen der detailreichen Transaktion mit der Transaktionszusammenfassung.

12. Verfahren nach Anspruch 11, wobei die Transaktionszusammenfassung durch eine Einheit erzeugt wird, die in der detailreichen Transaktion identifiziert wird, und die Einheit nicht der Dienstanbieter ist.

13. Verfahren nach Anspruch 11, das ferner Folgendes umfasst:
Detektieren einer Inkonsistenz zwischen der detailreichen Transaktion und der Transaktionszusammenfassung und
Erzeugen eines Fehlerberichts, der die Inkonsistenz umfasst.

14. Nicht transitorisches computerlesbares Medium, das Befehle enthält, die, wenn sie durch einen Computerprozessor ausgeführt werden, jeden der Verfahrensschritte nach den Ansprüche 8 bis 13 durchführen.

## Revendications

1. Système comprenant :
un registre ;
un fournisseur de services ; et
une pluralité de dispositifs de stockage de transactions,
chaque dispositif de stockage de transactions de la pluralité de dispositifs de stockage de transactions comprenant :
magasin de données configuré pour :
recevoir une demande, du fournisseur de services, pour pousser une transaction détaillée correspondant à un identifiant sécurisé, l'identifiant sécurisé étant généré, au moyen d'une fonction de codage, à partir d'un identifiant d'utilisateur d'un utilisateur ; et
stocker la transaction détaillée sur la base d'une détermination que la transaction détaillée est valide ;
et
un validateur configuré pour :
obtenir, à partir du registre, une règle de validation correspondant à l'identifiant sécurisé ; et
effectuer la détermination, la détermination comprenant l'application de la règle de validation à la demande ;
où
le registre est configuré pour stocker au moins la règle de validation, et le fournisseur de services est configuré pour fournir la demande de pousser la transaction détaillée vers le magasin de données lorsque le validateur valide la transaction détaillée.

2. Système selon la revendication **1,** dans lequel le registre est en outre configuré pour :
recevoir, depuis le fournisseur de services, une demande de consultation d'un premier magasin de données enregistré avec l'identifiant sécurisé ;
extraire un identifiant de ressource universel (URI) du premier magasin de données en réponse à la demande de consultation du premier magasin de données ; et
transmettre au fournisseur de services l'URI du premier magasin de données.

3. Système selon la revendication **1,** dans lequel la détermination comprend en outre l'étape suivante :
obtenir l'approbation de la transaction détaillée depuis une entité identifiée dans la transaction détaillée.

4. Système selon la revendication 1, dans lequel la détermination comprend en outre les étapes suivantes :
obtenir un résumé de transaction correspondant à la transaction détaillée ; et
comparer la transaction détaillée avec le résumé de la transaction.

5. Système selon la revendication 4, dans lequel le résumé de transaction est généré par une entité identifiée dans la transaction détaillée, où l'entité n'est pas le fournisseur de services.

6. Système selon la revendication 4, dans lequel le validateur est en outre configuré pour :
détecter une incohérence entre la transaction détaillée et le résumé de la transaction ; et
générer un rapport d'erreur décrivant l'incohérence.

7. Système selon la revendication **1,** dans lequel le registre est en outre configuré pour stocker une règle d'alerte correspondant à l'identifiant sécurisé, le système comprenant en outre un dispositif d'alerte configuré pour :
obtenir la règle d'alerte depuis le registre ; et
transmettre, en fonction de l'application de la règle d'alerte à la transaction détaillée, une alerte à l'utilisateur.

8. Procédé comprenant les étapes suivantes :
recevoir, dans un magasin de données d'un dispositif de stockage de transactions, depuis un fournisseur de services, une demande pour pousser une transaction détaillée correspondant à un identifiant sécurisé, l'identifiant sécurisé étant généré, au moyen d'une fonction de codage, à partir d'un identifiant d'utilisateur d'un utilisateur ;
obtenir, auprès d'un validateur du dispositif de stockage de transactions, une règle de validation de registre correspondant à l'identifiant sécurisé ;
déterminer, en fonction de l'application de la règle de validation à la demande, si la transaction détaillée est valide ; et
stocker dans le magasin de données la transaction détaillée sur la base de la détermination de la validité de la transaction détaillée,
le fournisseur de services fournissant la demande pour pousser la transaction détaillée vers le magasin de données lorsque le validateur valide la transaction détaillée.

9. Procédé selon la revendication 8, comprenant en outre les étapes suivantes :
recevoir une demande de consultation d'un premier magasin de données enregistré avec l'identifiant sécurisé ;
extraire un identifiant de ressource universel (URI) du premier magasin de données en réponse à la demande de consultation du premier magasin de données ; et
transmettre l'URI du magasin de données.

10. Procédé selon la revendication 8, dans lequel la détermination du fait que la transaction détaillée est valide comprend l'étape suivante :
obtenir l'approbation de la transaction détaillée depuis une entité identifiée dans la transaction détaillée.

11. Procédé selon la revendication 8, dans lequel la détermination du fait que la transaction détaillée est valide comprend les étapes suivantes :
obtenir un résumé de transaction correspondant à la transaction détaillée ; et
comparer la transaction détaillée avec le résumé de la transaction.

12. Procédé selon la revendication 11, dans lequel le résumé de transaction est généré par une entité identifiée dans la transaction détaillée, où l'entité n'est pas le fournisseur de services.

13. Procédé selon la revendication 11, comprenant en outre les étapes suivantes :
détecter une incohérence entre la transaction détaillée et le résumé de la transaction ; et
générer un rapport d'erreur comprenant l'incohérence.

14. Support non transitoire lisible par ordinateur comprenant des instructions qui, lorsqu'elles sont exécutées par un processeur d'ordinateur, exécutent chacune des étapes de procédé des revendications 8 à 13.
